# EUROPÄISCHE PATENTANMELDUNG

(11) **EP 1 308 860 A2**
(43) Veröffentlichungstag der Anmeldung: **07.05.2003**
(21) Anmeldenummer: 02450251.0
(22) Anmeldetag: 31.10.2002
(51) Int. Cl.: G06F 17/30

(54) **Verfahren zum Auffinden und Anbieten von Informationen und Diensten in einem Kommunikationsnetzwerk sowie entsprechendes Kommunikationssystem**

(30) Priorität: 31.10.2001 AT 17262001
(71) Anmelder: Siemens AG Österreich, 1210 Wien (AT)
(72) Erfinder: Withalm, Josef, 2191 Gaweinstal (AT); Fasching, Michael, 1190 Wien (AT); Fabo, Peter, 91105 Trencin (SK)
(74) Vertreter: Matschnig, Franz, Dipl.-Ing.

(57) **Zusammenfassung**

Die Erfindung betrifft ein Kommunikationssystem sowie eine Verfahren zum Auffinden und/oder Anbieten bzw. zur Verfügung stellen von Informationen und/oder Diensten in einem Kommunikationsnetzwerk (NET). Informationen sind auf Informationsservern (IS1 - IS3, POR) abgelegt und sind mittels eines an das Kommunikationsnetzwerk (NET) angeschlossenen Datenverarbeitungsgerätes (PEC) abrufbar. An das Kommunikationsnetzwerk (NET) ist zumindest ein Registrierungsserver (REG) angeschlossen, der mit den Informationsservern (IS1 - IS3, POR) zum Austausch von Daten (da1, da3) verbindbar ist. Weiters sind von einem an den Registrierungsserver (REG) angebundenen Informationsserver (IS1, IS3) Daten (da1, da3) betreffend die über das Kommunikationsnetz (NET) zur Verfügung stehenden, auf dem Informationsserver (IS1, IS3) abgelegten Informationen an den Registrierungsserver (REG) übertragbar und in einem Speicher (SPE) des Registrierungsservers (REG) zumindest für die Dauer der Verbindung zwischen dem Informationsserver (IS1, IS3) und dem Registrierungsserver (REG) abspeicherbar.

## Beschreibung

Die Erfindung betrifft ein Kommunikationssystem zum Auffinden und/oder Anbieten bzw. zur Verfügung stellen von Informationen und/oder Diensten in einem Kommunikationsnetzwerk, wobei die Informationen in an das Kommunikationsnetzwerk angeschlossenen Informationsservern abgelegt sind, welche mittels eines an das Kommunikationsnetzwerk angeschlossenen Datenverarbeitungsgerätes abrufbar sind.

Weiters betrifft die Erfindung ein Verfahren zum Auffinden und/oder Anbieten bzw. zur Verfügung stellen von Informationen und/oder Diensten in einem Kommunikationsnetzwerk, wobei die Informationen in an das Kommunikationsnetzwerk angeschlossenen Informationsservern abgelegt sind, welche mittels eines an das Kommunikationsnetzwerk angeschlossenen Datenverarbeitungsgerätes abgerufen werden.

Derzeit stellt die Informationssuche im Internet oftmals ein Problem dar, insbesondere wenn es darum geht, sichere und zuverlässige Datenquellen zu einem bestimmten Thema zu finden. Zur Zeit werden vor allem sogenannte Internet-Suchmaschinen verwendet, die zumeist über eine eigenen Internet-Seite aufgerufen werden können. Auch sogenannte Meta-Suchmaschinen sind gebräuchlich, dabei handelt es sich um eine auf Benutzerseite ablaufende Software, über welche eine Suchabfrage formuliert werden kann. Diese Software ruft dann mehrere herkömmliche Suchmaschinen auf, die entsprechend den eingegebenen Informationen abgefragt werden.

Nachteilig an der Verwendung solcher Suchmaschinen ist, dass es sich bei den aufgefundenen Daten lediglich um "indirekte" Daten, d.h. um Daten, die in der lokalen Datenbank der Suchmaschine abgelegt sind, handelt. Aus diesem Grund sind die Daten oftmals veraltet oder, da keine Sortierung und Autorisierung der Quelle stattfindet, auch unsicher.

Manche Daten der Suchmaschinen enthalten zwar Verknüpfungen zu direkten Datenquellen, wobei diese aber oftmals veraltet oder nicht mehr existent sind (sogenannte "Tote Links"). Oftmals liefern diese Daten auch ein übermäßiges Angebot, da keine Autorisierung und Sortierung der Quellen stattfindet.

In nachteiliger Weise ist außerdem bei solchen verknüpften Informationssystemen die Kommunikation mit den verschiedenen Informationssystemen sehr unterschiedlich und muss von dem Benutzer manuell geführt werden.

Schließlich ist auch noch anzumerken, dass die von Suchmaschinen verwendete Kommunikation über mehrere Server langsam ist.

Diese Probleme können auch mit den bekannten Lösungsansätzen der Navigationslevels N0 - N2 nicht behoben werden. Bei dem Navigationslevel N0 handelt es sich dabei um die weitverbreitete "wortbasierte" Suche, das Navigationslevel N1 ermöglicht auch die Verknüpfungen ausgehend von themenbasierten Webseiten. Bei einer Internet-Suche basierend auf dem Navigationslevel N2 ist es schließlich bereits möglich, von einer "übergeordneten" Webseite verschiedene Themengebiete aufzurufen, beispielsweise bieten sogenannte "Reiseportale" eine Verknüpfung zu Hotels, Bahn, Flug, etc.

Grundsätzlich liefern Suchen basierend auf dem Level N2 bereits sehr gute Ergebnisse. Nachteilig an dieser Art der Suche ist allerdings der Engpass der übergeordneten Startseite. Einerseits muss einem Benutzer diese Startseite bekannt sein, da ansonsten eine oben beschriebene Suche nicht möglich ist, andererseits wirkt sich die Tatsache, dass die aufgefundenen "Suchergebnisse" über diese Startseite angesprochen werden, zumeist auch auf die Kommunikationsleitung, d.h. auf die Verbindungsgeschwindigkeit aus, und in Extremfällen, wie bei einer sehr großen Anzahl von Abfragen, kann es auch zu einem Zusammenbruch der Verbindung kommen.

Es ist eine Aufgabe der Erfindung, ein Navigationslevel N3 zu schaffen, das die Erfüllung der oben angeführten Aufgabenstellungen erleichtert grundsätzliche Lösungen für diese Probleme bietet.

Diese Aufgabe wird mit einem eingangs erwähnten Kommunikationssystem dadurch gelöst, dass erfindungsgemäß zumindest ein Registrierungsserver an das Kommunikationsnetzwerk angeschlossen ist, die Informationsserver unmittelbar oder über das Kommunikationsnetzwerk mit dem zumindest einen Registrierungsserver zum Austausch von Daten verbindbar sind, und von einem an den Registrierungsserver angebundenen Informationsserver Daten betreffend die über das Kommunikationsnetz zur Verfügung stehenden, auf dem Informationsserver abgelegten Informationen an den Registrierungsserver übertragbar und in einem Speicher des Registrierungsservers zumindest für die Dauer der Verbindung zwischen dem Informationsserver und dem Registrierungsserver abspeicherbar sind.

Diese Erfindung ermöglicht es, dass asymmetrische, heterogene, verteilte und unabhängige elektronische Informationssystem-Server über ein Registrierungszentrum über eine standardisierte Server-Server Kommunikation autorisiert, thematisch zugeordnet und den Clients angeboten werden. Über diese geprüfte Information kann der Client dann direkt, d.h. ohne den Umweg über den Registrierungsserver, eine Punkt-zu-Punkt Verbindung zu dem gewünschten Server aufbauen.

Besonders vorteilhaft ist es, wenn der Registrierungsserver dazu eingerichtet ist, die von einem Informationsserver stammenden Daten zu vorgebbaren Zeitpunkten auf ihre Aktualität zu überprüfen, indem beispielsweise das Vorhandensein der Verbindung zu einem Informationsserver geprüft wird. Auf diese Weise ist zuverlässig gewährleistet, dass einem Abfrager keine nicht mehr aktuellen Daten oder tote Links angeboten werden.

Außerdem ist vorgesehen, dass der Registrierungsserver dazu eingerichtet ist, bei einer Verbindungstrennung eines Informationsservers die entsprechenden Daten aus seinem Speicher zu löschen, wodurch die Daten bei jedem neuen Verbindungsaufbau aktuell sind.

Weiters ist der Registrierungsserver dazu eingerichtet, bei einer Anfrage die an Hand der ihm zur Verfügung stehenden Daten ermittelten Verbindungen zu Informationsservern an das abfragende Datenverarbeitungsgerät zu übermitteln, damit es dem anfragenden Benutzer möglich wird, die aufgefundenen Suchergebnisse anzusprechen bzw. zu betrachten.

Von Vorteil ist es, wenn eine Anfrage mit dem Datenverarbeitungsgerät vorerst an einen Portal-Server übermittelt wird, welcher diese an den Registrierungsserver weiterleitet. Dieser Portal-Server kann dann vorerst versuchen, die Anfrage selbst zu beantworten und die Ergebnisse dem Anfrager zur Verfügung stellen.

Weiters ist dann vorgesehen, dass der Portal-Server dazu eingerichtet ist, eine Anfrage erst dann zumindest teilweise an den Registrierungsserver weiterzuleiten, wenn dem Portal-Server eine Erledigung der Anfrage auf Grund der ihm vorliegenden Daten nicht oder nur teilweise möglich ist. Auf diese Weise kann die Suche sehr effizient betrieben werden, da eine "Belastung" des Registrierungsservers erst dann erfolgt, wenn die Portal-Server selbst die Anfrager nicht mehr weiter bearbeiten kann.

Nachdem die Suchergebnisse feststehen, übermittelt der Registrierungsserver die ermittelten Suchergebnisse an den Portal-Server, welcher entsprechend diesen Ergebnissen eine Verbindung zu einem oder mehreren Informationsservern herstellt, welche dann dem anfragenden Benutzer etwa in seinem Web-Browser dargestellt werden.

Besonders günstig ist es in diesem Zusammenhang, wenn der Portal-Server dazu eingerichtet ist, die Suchergebnisse vorerst an das anfragende Datenverarbeitungsgerät zu übermitteln und eine Verbindung zu einem oder mehreren der Informationsserver erst nach einer Auswahl durch einen Benutzer des Datenverarbeitungsgerätes herzustellen. Dies ist insbesondere dann von Vorteil, wenn mehrere verschiedene Treffer bei der Suche ermittelt werden, und dem Benutzer eine Endauswahl überlassen wird.

Oftmals werden auch kostenpflichtige Suchergebnisse ermittelt, oder es kann ein Benutzer entsprechend dem Suchergebnis gleich etwa ein Zug- oder Flugticket buchen. Damit dies alles vollautomatisch erfolgen kann, ist es zweckmäßig, wenn der Registrierungsserver dazu eingerichtet ist, bei kostenpflichtigem Informationsaustausch über ein Verrechnungszentrum die Kosten zu erfassen und entweder selbst oder über das Portal einem Kunden zu verrechnen.

Damit ein einfaches Einbinden neuer Informationsserver möglich ist, ist vorgesehen, dass die Kommunikation zwischen den Servern über einheitliche Software-Schnittstellen erfolgt. Ein nachträgliches Einbinden neuer Server ist dann einfach möglich. Außerdem ist dann weiters einfach möglich, die aufgefundenen Suchergebnisse, die bei einer komplizierten, länderübergreifenden Suche oftmals auch mehrsprachig vorliegen, dem anfragenden Benutzer in einer ihm geläufigen Sprache darzubieten.

Besonders zweckmäßig ist es, wenn die Schnittstellenbeschreibung mittels "Interface Definition Language" erfolgt, die sich für oben genannte Zwecke sehr gut eignet.

Dabei erfolgt die Kommunikation unter Verwendung eines "Object Request Broker" erfolgt, wie weiter unten noch eingehender erläutert.

Vorzugsweise wird als "Object Request Broker" CORBA verwendet.

Weiters wird diese Aufgabe mit einem eingangs erwähnten Verfahren dadurch gelöst, dass erfindungsgemäß die Informationsserver unmittelbar oder über das Kommunikationsnetzwerk mit zumindest einem an das Kommunikationsnetzwerk angeschlossenen Registrierungsserver zum Austausch von Daten verbunden werden, und von einem an den Registrierungsserver angebundenen Informationsserver Daten betreffend die über das Kommunikationsnetz zur Verfügung stehenden, auf dem Informationsserver abgelegten Informationen an den Registrierungsserver übertragen und in einem Speicher des Registrierungsservers zumindest für die Dauer der Verbindung zwischen dem Informationsserver und dem Registrierungsserver abgespeichert werden.

Auf die vorteilhaften Ausführungsformen des Verfahrens wurde bereits oben im Zusammenhang mit dem erfindungsgemäßen Kommunikationssystem eingegangen.

Im folgenden ist die Erfindung an Hand der Zeichnung näher erläutert. In dieser zeigt
Fig. 1 ein System zum Durchführen eines erfindungsgemäßen Verfahrens,
Fig. 2 einen beispielhaften Ablauf eines erfindungsgemäßen Verfahrens, und
Fig. 3 einen beispielhaften Ausschnitt aus der Struktur eines erfindungsgemäßen Verfahrens.

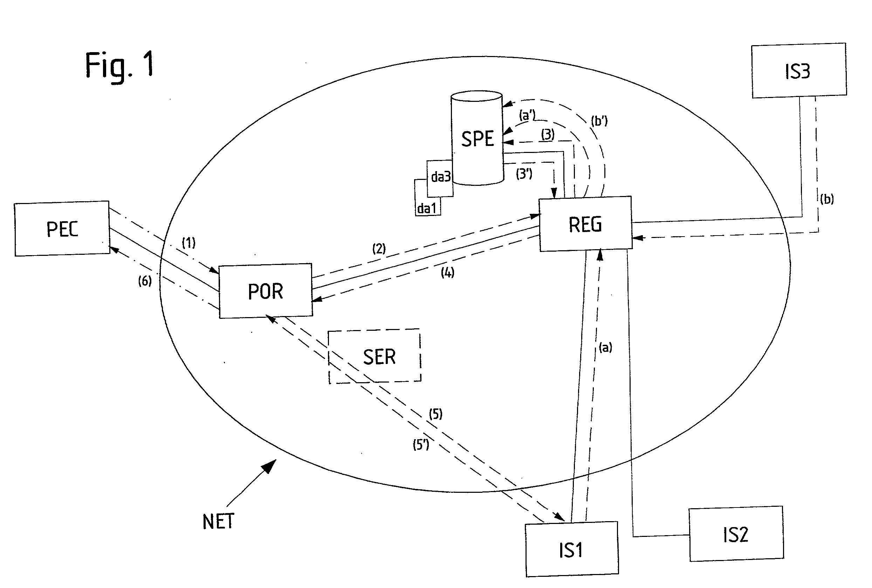

Die Fig. 1 zeigt einen Benutzer-Client PEC, beispielsweise einen herkömmlichen Personalcomputer, mittels welchem von einem Benutzer unter anderem Suchabfragen in einem Datennetz NET, beispielsweise einem LAN, MAN oder WAN durchgeführt werden können. Insbesondere ist bei einem solchen Datennetz natürlich an das bekannte Internet zu denken.

Entsprechend der Erfindung wird eine Suchabfrage über einen Portalserver POR eines Anbieters an einen Registrierungsserver REG übermittelt, welcher über das Datennetz NET mit dem Portal-Server POR kommunizieren kann. Beispielsweise steigt der Benutzer mit seinem Personalcomputer PEC auf einer Internet-Seite, welche von dem Portalserver POR angeboten wird, in das Internet ein und stellt seine Anfrage über eine entsprechende Eingabemaske.

Bei den Anfragen kann es sich um reine Auskünfte handeln, es können aber insbesondere auch alternativ oder ergänzend Dienstleistungen nachgefragt werden. Beispielsweise könnte es sich bei einer einfachen Anfrage um eine Zugverbindung zwischen zwei Destinationen handeln. Zu dieser "reinen Auskunft" könnte aber gleich auch noch der Dienst zur Bestellung der entsprechenden Tickets nachgefragt werden.

Grundsätzlich wird der Portal-Server POR versuchen, mit den ihm zur Verfügung stehenden Daten bzw. Diensten die Anfrage bzw. Nachfrage zu beantworten und das Ergebnis dem anfragenden Computer PEC auf der Internetseite des Portal-Servers POR zur Verfügung zu stellen.

Dem Registrierungsserver REG stehen Daten da1, da3 von Informationsservern IS1, IS3, welche mit dem Registrierungsserver REG über Datenleitungen, insbesondere über das Internet NET kommunizieren können, zur Verfügung. Wird ein Informationsserver IS1, IS2, IS3 in Betrieb genommen, so meldet er sich - falls dies von Betreiberseite gewünscht ist - bei dem Registrierungsserver REG an und stellt diesem die Daten da1, da3 betreffend die von ihm dem Netz zur Verfügung gestellten Informationen zur Verfügung.

Die Daten enthalten alle Informationen, welche die Informationssysteme IS1 - IS3, POR dem Registrierungszentrum REG anbieten. Da diese Daten immer direkt abgefragt werden, sind sie immer aktuell.

In diesem Bild kann natürlich auch der Portal-Server POR seinerseits als Informationsserver betrachtet werden, der auch anderen Benutzern, die nicht über ihn selbst eine Anfrage stellen, seine Daten bzw. Dienste zur Verfügung stellt, vorzugsweise, indem der Portal-Server POR selbst bei dem Registrierungsserver REG registriert und angemeldet ist.

Wie der Fig. 1 zu entnehmen ist und später noch eingehender erläutert, sind die beiden Informationsserver IS1, IS3 bei dem Registrierungsserver REG angemeldet, während der Informationsserver IS2 nicht bei dem Registrierungsserver REG angemeldet ist und diesem somit auch keine Daten betreffend Informationen auf dem Informationsserver IS2 zur Verfügung stehen.

Ist es dem Portal-Server POR nicht möglich, eine Anfrage selbst zu beantworten, so versucht, diese unter Verwendung des Registrierungsserver REG zu erledigen, indem er die ausständigen Anfragepunkte an den Registrierungsserver REG übermittelt.

Wird nun eine Suchanfrage, die auch - wie oben bereits kurz angesprochen - komplexere Themen bzw. kombinierte Suchen enthalten kann, an den Registrierungsserver REG übermittelt, so führt dieser eine entsprechende Recherche unter den ihm zur Verfügung stehenden Daten da1, da3, die in einem dem Registrierungsserver REG zugeordneten Speicher SPE abgelegt sind, durch.

Wie oben bereits angesprochen, liegen von Informationsservern IS2, die entweder nicht in Betrieb sind oder bei denen von Betreiberseite nicht gewünscht ist, dass Informationen von diesen Servern IS2 zur Verfügung gestellt werden, keine Daten betreffend Informationen vor bzw. werden diese Daten entsprechend nicht als "verfügbar" gekennzeichnet, sodass sie bei einer Suchanfrage nicht berücksichtigt werden. Dazu melden sich die entsprechenden Informationsserver IS2 bei dem Registrierungsserver REG ab oder erst gar nicht an, sodass dem Registrierungsserver REG die Daten nicht mehr zur Verfügung stehen. Nur jene Daten des Informationsserver IS2, welche über die Schnittstelle angeboten werden, sind überhaupt verfügbar gewesen. Jeder IS1 und IS2 hat somit die Kontrolle über die eigenen Daten.

Dieses Anmelde- und Abmeldeverfahren der Informationsserver IS1 - IS3 bringt den Vorteil, dass der Registrierungsserver REG nur unter aktuellen Daten da1, da3 entsprechend einer Suchanfrage suchen kann, sodass nicht mehr die Gefahr besteht, dass etwa ein Link ermittelt wird, der in Wirklichkeit zur Zeit gar nicht existiert.

Nachdem der Registrierungsserver REG ein Suchergebnis ermittelt hat, wird dieses an den anfragenden Portal-Server POR übermittelt und dieser stellt dann direkt die Verbindung zu den jeweiligen Informationsservern her und die gewünschten Informationen werden auf den anfragenden Computer PEC übertragen und dort beispielsweise mit einem Browser dargestellt.

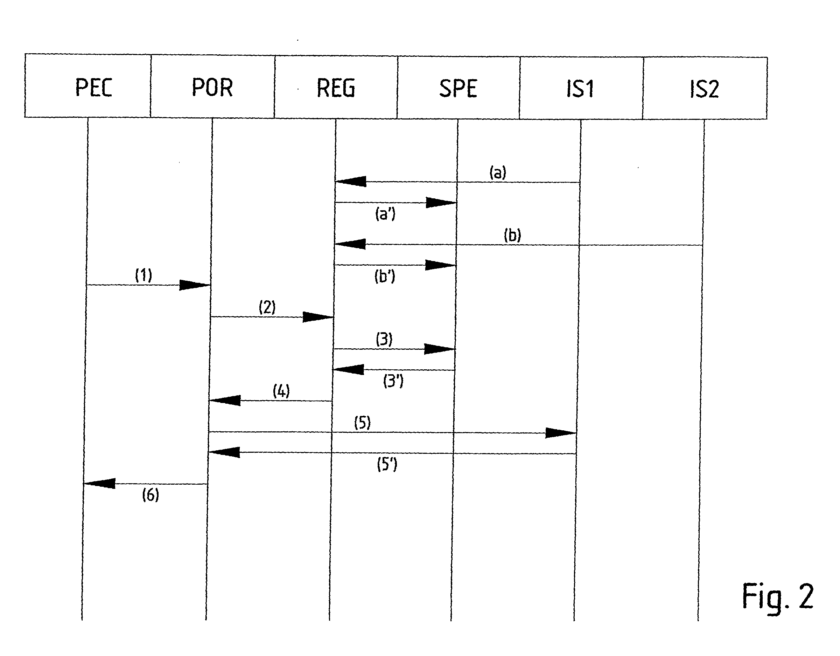

Im folgenden ist an Hand der Fig. 1 und insbesondere Fig. 2 der zeitliche Ablauf des erfindungsgemäßen Verfahrens nochmals kurz dargestellt. In einem ersten Schritt (a), (b) melden sich die beiden Informationsserver IS1, IS3 bei dem Registrierungsserver REG an und die für eine Suche notwendigen Daten da1, da3 werden von dem Registrierungsserver REG in einer Datenbank, die auf einer Speichereinrichtung SPE gespeichert ist, abgelegt (a'), (b').

Eine Suchanfrage wird mit einem Computer PEC eingegeben, wozu dieser beispielsweise über das Internet eine Verbindung zu einem Portal-Server POR herstellt (1). Vorerst sucht der Portal-Server POR in seiner eigenen Datenbank DPO (2, 2'), allfällige Suchergebnisse werden dem anfragenden Computer PEC übermittelt (2"). Wenn die Antwort bereits vollständig möglich ist, endet dieses Verfahren hier. Bei verteilten, unabhängigen, heterogenen und möglicherweise weltweiten Systemen ist das aber oft nicht der Fall.

Falls also notwendig, übermittelt der Portal-Server POR die Suchanfrage bzw. einen Teil davon an den Registrierungsserver REG (3), welcher eine entsprechende Suche in seiner Datenbank durchführt (4). Entsprechende Suchergebnisse, etwa eine Verbindung zu einem Informationsserver, werden dem Portal-Server POR übermittelt bzw. aus der Datenbank entnommen (4') und an den Portal-Server POR weitergeleitet (5). Der Portal-Server POR stellt nun direkt, d.h. ohne den Umweg über den Registrierungsserver REG, durchaus aber über andere Server SER, eine Verbindung zu dem oder den Informationsservern IS1 entsprechend dem Suchergebnis her (6). Die Informationen werden dann von dem Informationsserver IS1 auf den Portal-Server POR übertragen bzw. von diesem heruntergeladen (6') und anschließend an den Computer PEC übermittelt (7), wo sie entsprechend ausgegeben werden.

In der Praxis ist der Registrierungsserver REG Teil eines Registrierungszentrums, dass von einem Betreiber betrieben wird. Auch wenn hier und in den Ansprüchen zum Teil von "einem" Registrierungsserver gesprochen wird, so ist natürlich damit auch der Fall gemeint und abgedeckt, dass die verschiedenen Aufgaben von mehreren Servern abgewickelt werden. Die unterschiedlichen Informationsserver IS1 - IS3, Portal-Server POR werden in der Regel von verschiedenen Personen oder Firmen betrieben. Möchte nun ein solcher Betreiber eines Informationsservers dessen Informationen über das Registrierungszentrum zugänglich machen, so ist vorerst eine vorteilhafterweise vertragliche Einigung mit dem Betreiber des Registrierungszentrums notwendig, bei der verschiedene Punkte, beispielsweise monetärer Natur, etc. geregelt sind. Nach dieser Einigung erfolgt die erstmalige Anmeldung des Informationsservers bei dem Registrierungsserver, und ab diesem Zeitpunkt kann sich der Informationsserver beliebig bei dem Registrierungsserver ab- und anmelden.

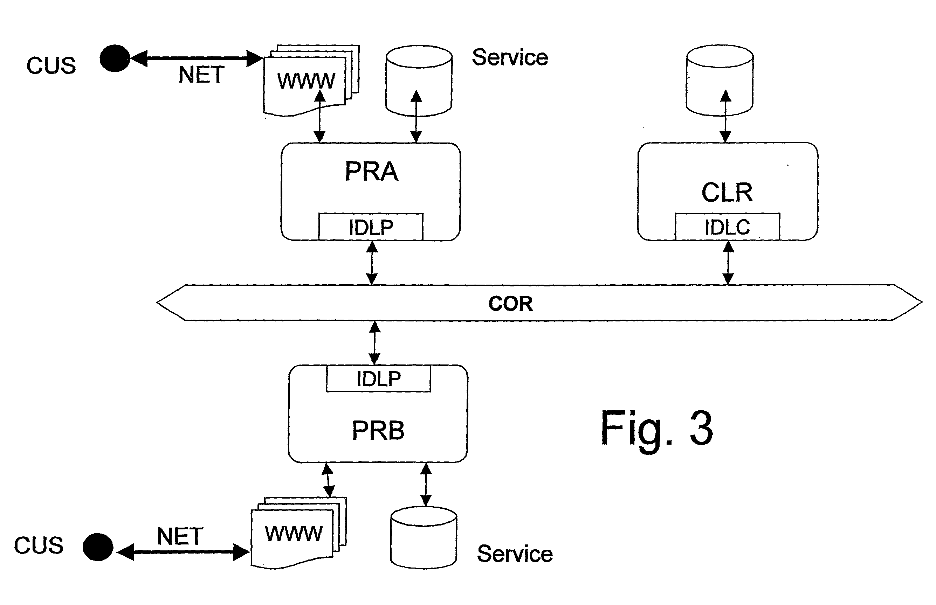

Die Verbindung beispielsweise eines Informationsservers mit dem Registrierungsserver, aber auch der Portal-Server POR und Registrierungsserver REG sowie Informationsserver IS1 - IS3 untereinander erfolgt über genormte Schnittstellen, vorzugsweise Software-Schnittstellen, wie dies der Fig. 3 zu entnehmen ist. Die Kommunikation erfolgt beispielsweise auf der Middleware "CORBA" (Common Object Request Broker Architecture), momentan auf der CORBA 2.0 Norm, welche von der Open Management Group (OMG) erstellt wurde. Mittels Corba ist die Interaktion zwischen verschiedenen, in unterschiedlichen Programmiersprachen (beispielsweise C, C++, Java, Cobol, ...) verfassten und auf unterschiedlichen Betriebssystemen ablauffähigen Objekten sichergestellt. Ab Corba 2.0 ist die Zusammenarbeit von bei unterschiedlichen "Object Request Brokern" registrierten Objekten über das Internet mittels des Internet Inter-ORB Protocol (IIOB) möglich. Bei IIOB handelt es sich um ein Protokoll für den Objekt-bezogenen Zugriff über das Internet, und es kann z.B. ein bei einem ORB registriertes Java-Applet (ein Java-Objekt) über das Internet von jedem anderen Corba-Objekt zur Verarbeitung von Anfragen angefordert werden.

Bei CORBA handelt es sich, wie der Name sagt, um einen allgemeinen "Object Request Broker" (ORB). Solche ORBs übernehmen die für die Zusammenarbeit zwischen verteilten Objekten notwendige Vermittlerrolle. Verteilte Objekte sind dezentralisierte, auf dem Adressraum von mehreren Systemen abgelegte Objekte, die mit den Objekten auf den unterschiedlichen Systemen zusammenarbeiten. ORBs lassen Objekte, die auf viele Rechner verteilt sind, effizient zusammenarbeiten und gaukeln ihnen vor, dass sie sich im selben Adressraum befinden. Der ORB verfügt über eine Liste aller zugänglicher Komponenten und reicht Aufgaben an den richtigen Bearbeiter weiter.

In diesem Zusammenhang ist unter einem Objekt ein ablauffähiges Paket für Code und Daten zu verstehen. Damit erstellte Systeme sind sehr sicher und haben eine hohe Qualität, weil auf die Daten nur ihr eigener Code zugreifen kann. Zur Durchsetzung dieser Kapselung wird der Code in einer begrenzten Anzahl von Methoden gruppiert. Unterschiedliche Objekte können dabei unterschiedlich auf einen Befehl reagieren. Schließlich bedeutet noch "Datenpaket" eine im Rahmen eines Datennetzes definierte Anordnung von Zeichen, die bei Übertragungsdiensten mit Datenpaketvermittlung als Einheit behandelt wird. Neben den Nutzdaten enthalten Datenpakete auch Steuerinformationen für die Adressierung, Sendefolge, Flusskontrolle und Fehlerkorrektur auf allen Protokollebenen. Ein Datenpaket kann eine festgelegte oder variable Länge haben, wobei allerdings eine Höchstgrenze spezifiziert ist. Ist in jedem Datenpaket die vollständige Zieladresse enthalten, spricht man von einem Datagramm. Bei einer virtuellen Verbindung hingegen enthält nur das erste Datenpaket die vollständige Adresse, während in den folgenden eine Zuordnung zur jeweiligen Verbindung vermerkt ist.

IIOP (Internet Inter-ORB Protocol) ist ein Protokoll, mit dem es möglich ist, dass verteilte Programme, die in verschiedenen Programmiersprachen geschrieben sind, über das Internet miteinander kommunizieren. IIOP ist ein wichtiger Bestandteil von CORBA, mit dem es möglich ist, dass Programme miteinander kommunizieren können, unabhängig davon, wo diese lokalisiert sind, und ohne dass man mehr von dem Programm versteht als dessen Dienste und dessen Namen.

CORBA und IIOP gehen von einem Client/Server-Modell aus, in welchem das Client-Programm eine Anfrage (REQUEST) stellt und ein Serverprogramm darauf wartet, solche Anfragen von Clients zu empfangen.

Damit ein Client irgendwo in einem Netzwerk eine Anfrage stellen kann, muss er eine Adresse für das Programm haben. Diese Adresse ist bekannt als die "Interoperable Object Reference" (IOR). Bei Verwendung von IIOP basiert ein Teil der Adresse auf der Nummer des Server-Ports und dessen IP-Adresse. Im Client-Computer kann eine Tabelle erzeugt werden, in welcher IORs Proxy-Namen zugeordnet sind, da diese einfacher zu benutzen sind.

Wie der Fig. 3 zu entnehmen ist, kommunizieren nun verschiedene Server PRA, PRB von unterschiedlichen Providern über die oben angesprochenen Software-Schnittstellen IDLP unter Verwendung von Corba COR miteinander. Die Verbindung der einzelnen Benutzer CUS wird dabei mit den Servern PRA, PRB beispielsweise über das Internet NET hergestellt. Weiters gezeigt ist eine Verrechnungs- bzw. Clearing-Stelle CLR, die ein funktional trennbarer Teil des Registrierungsservers REG ist. Diese Verrechnungsstelle CLR erfasst bei einem kostenpflichtigen Informationsaustausch - darunter soll etwa auch das Online-Buchen von Tickets etc. zu verstehen sein - die anfallenden Kosten und verrechnet diese dem anfragenden Benutzer entweder direkt oder über das Portal POR.

Bei unentgeltlicher Zurverfügungstellung von Daten kann die Clearingstelle CLR entfallen. Die Clearing-Stelle CLR kommuniziert mit den Providern ebenfalls über eine Software-Schnittstelle IDLC. Dazu ist die Oberfläche jedes Corba-Objekts mit Hilfe oben erwähnter Software-Schnittstellen beschrieben, wozu die sogenannte "Interface Definition Language" (IDL) verwendet wird. Alle Attribute, Methoden, Ereignisse, Ausnahmen, etc., also das Verhalten und Erscheinungsbild des Objekts nach Außen werden mit dieser "Interface Definition Language" genau beschrieben. Ein Hotelobjekt, mittels welchem Informationen betreffend ein bestimmtes Hotel zur Verfügung gestellt werden, hat beispielsweise eine andere Schnittstelle als z.B. ein Objekt für einen Bahnfahrt oder für einen Flug. Allerdings weist die entsprechende IDL-Datei bei allen Objekten die gleiche Struktur auf, lediglich der Inhalt unterscheidet sich.

IDL ("Interface Definition Language") ist ein allgemeiner Ausdruck für eine Sprache, die es erlaubt, dass ein Programm oder Objekt, das in einer bestimmten Sprache abgefasst ist, mit Programmen bzw. Objekten kommunizieren kann, welche in einer anderen oder unbekannten Sprache geschrieben sind. Beispielsweise bei der hier verwendeten Technik der verteilten Objekte ist es wichtig, dass neue Objekte an jede Plattform-Umgebung übermittelt werden können, wo sie feststellen, wie sie in dieser Umgebung laufen können. Ein oben bereits beschriebener Object Request Broker (ORB) ist ein Beispiel für ein Programm, das IDL für die Vermittlung zwischen einem Objektprogrammm und einem anderen verwendet.

Auf diese Weise wird es dann (unter Verwendung von Corba) auch möglich, bestehende "Alt"-Systeme in eine moderne Client/Server-Anwendung einzubinden. Durch die Verwendung von IDL ist man sprachunabhängig, die Plattformunabhängigkeit ist durch die Verwendung von IIOP gegeben.

Für einen Client ist es somit belanglos, wo sich ein verteiltes Objekt befindet, unter welchem Betriebssystem es läuft, und wie das Server-Objekt implementiert ist. Die Clients kennen lediglich die Schnittstelle des Server-Objektes.

Ein Beispiel für eine solche IDL ist im folgenden kurz schematisch angedeutet:

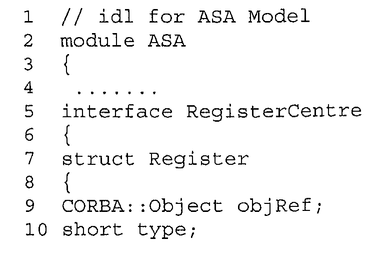

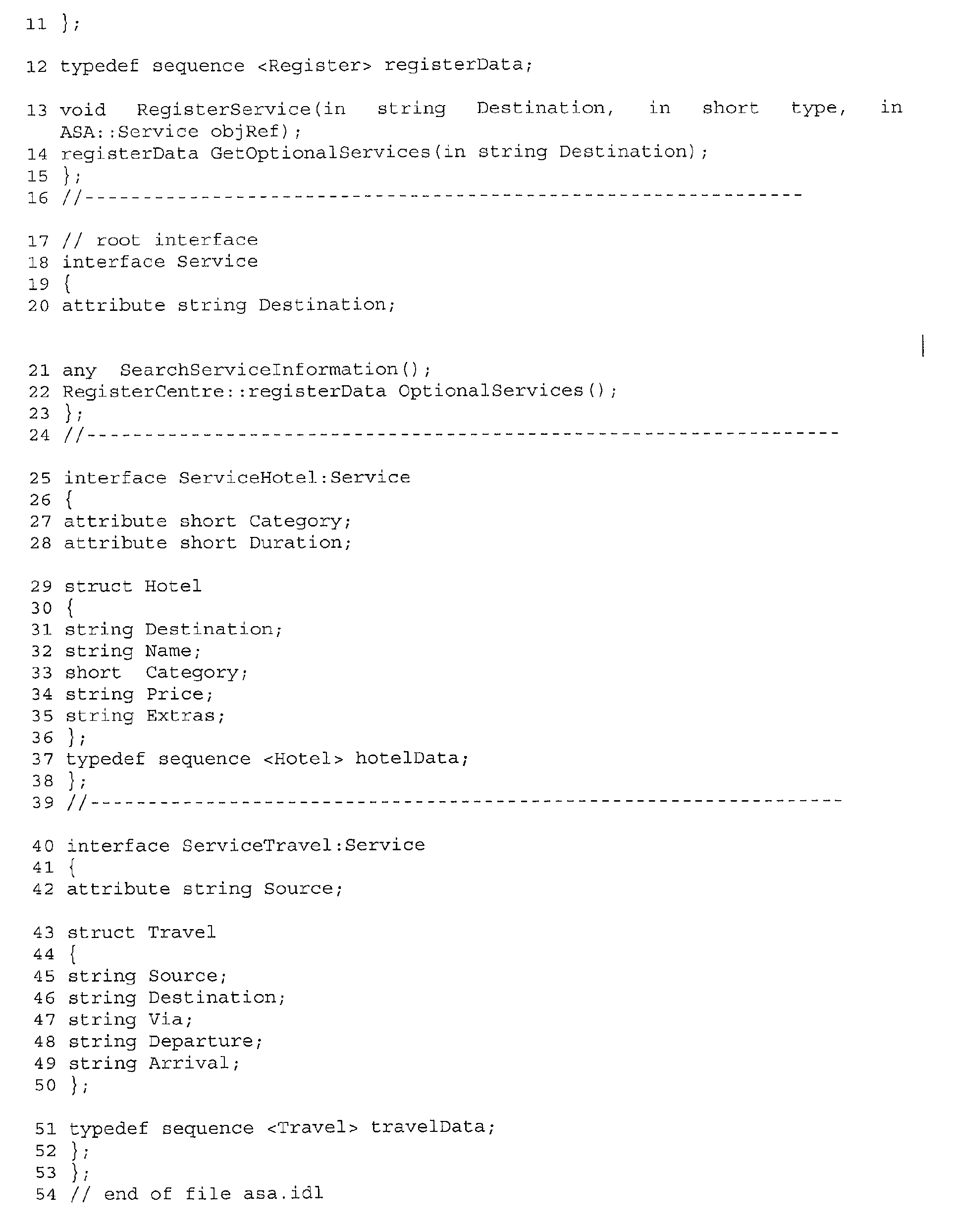

Oben abgebildetes Beispiel beginnt mit dem "module" in Zeile [2], dem JAVA-Äquivalent einer "package" bzw. C++-Äquivalents eines "namespace". Die Syntax einer IDL ist ähnlich einer C++-Syntax. Die Unterschiede sind in Abbildungsregeln normiert.

Mit "interface" in Zeile [5] beginnt die Beschreibung der Schnittstelle zum Registrierungszentrum REG. Dieses ist über die Referenz [9] von jedem Portal-Server POR erreichbar. Mit [13] können verschiedene Informationsserver IS1 zum Beispiel Hotelinformationen [25] oder Informationsserver IS3 Reiseinformationen [40] als Spezialisierungen der allgemeinen Information [18] anbieten.

Diese können vom Portal POR beispielsweise über die Methode [14] aufgrund geografischer Angaben gefunden werden. Diese gefundenen Daten auf IS1 [31 -35] oder IS3 [45-49] können dann vom Portal POR für den Benutzer-Client PEC aufbereitet werden. Über diese Lokalisierung [14] ist es möglich, dass geografische Abhängigkeiten automatisch erfasst werden. Wird beispielsweise ein bestimmter Zielbahnhof gesucht, so kann aus dieser Angabe auf die Zielstadt rückgeschlossen werden und es werden etwa Hotels, Restaurants, etc. dem Anfrager nur aus dieser Stadt oder der nächsten Umgebung angeboten.

Durch die Verwendung der IDL kann auch eine thematische Zuordnung verschiedener Begriffe erfolgen. Beispielsweise können die Begriffe "Sporthotel" und "Kurhotel" thematisch dem Begriff "Hotel" zugeordnet werden, und bei einer Suche kann dann etwa ausgehend von "Sporthotel" auf den Begriff "Hotel" verallgemeinert werden, oder umgekehrt ausgehend von "Hotel" die Suche thematisch verfeinert werden.

Diese IDL ist ein wichtiger Bestandteil der CORBA Spezifikation, die beispielsweise auch den Datentransport regelt.

Die Datenbank mit den Daten der Informationsserver enthält im wesentlichen folgende beispielhafte Informationen:

| | | | |
|---|---|---|---|
| Destination (station) | IIOR | IDL-Typ | Beschreibung |
| Rimini | 122345678 | HOTEL | Hotel-Reservierung |
| Wien | 23456234 | LTR | Local Travel, |

wobei sich Local Travel in diesem Zusammenhang auf Daten von lokalen Anbietern bezieht.

Die Erfindung weist den Vorteil auf, dass ein Anwender auf einem Server bleibt, unabhängig von den Anforderungen, welche an andere Server geschickt werden. Dieser Server, der weiter oben als Portal-Server POR bezeichnet wurde, bearbeitet die Eingaben von Benutzern und leitet sie gegebenenfalls an andere Server weiter. Weiters empfängt und bearbeitet er auch die Antworten der verschiedenen Server für den Anwender und gibt sie auf einheitliche Weise aus. Daher sind Daten aus verschiedenen Ländern (z.B. Local Travel Italien) beispielsweise je Portal POR in verschiedenen Sprachen darstellbar. Aufgrund der einheitlichen Schnittstellenbeschreibung und der damit verbundenen Einheitlichkeit der damit angeforderten Daten ist dabei die "Übersetzung" der anzuzeigenden Daten in die Sprache des Benutzers leicht möglich.

Der Registrierungsserver wird von einem Betreiber unterhalten, der verschiedene Aufgaben zu erfüllen hat. So muss dieser Registrierungsbetreiber Verträge mit den Diensteanbietern, d.h. den Betreibern der Informationsserver, abschließen, die einen reibungslosen Ablauf garantieren und die Zuständigkeiten im Falle von Problemen regeln. Weiters ist der Registrierungsbetreiber in der Regel noch für sogenannte "Back-Office"-Funktionalitäten verantwortlich, d.h. für die Abwicklung der Bezahlung, Verrechnung, Verteilung der Provisionen etc. der Einnahmen durch die Bezahlung der Anwender, sowie für den technischen Betrieb des bzw. der Registrierungsserver, Qualitätssicherung der Inhalte, etwa hinsichtlich der Aktualität der Inhalt oder der Überprüfung der Inhalte an sich, etc.

Verschiedene autonome Betreiber bieten unterschiedliche Dienste an, welche über bestimmte Web-Portale angeboten werden, wobei diese Dienste einfache aber auch sehr komplizierte Strukturen aufweisen können. In der Regel hat dabei jeder Dienst eines Anbieters ein eindeutiges Interface, das beispielsweise auch in der jeweiligen Landessprache gehalten ist. Diese Dienste stehen nun - vorausgesetzt, die Informationsserver der jeweiligen Betreiber sind bei dem Registrierungsserver angemeldet - auch Benutzern über die anderen Web-Portale zur Verfügung.

Bei der Anfrage durch einen Benutzer wird der Portal-Server zuerst versuchen, die Anfrage mit seinen eigenen Diensten abzudecken. Ist dies möglich, so werden die Ergebnisse bzw. Dienste dem Anfrager übermittelt bzw. angeboten. Ist dies dem Portal-Server teilweise oder gar nicht möglich, so richtet er eine entsprechende Anfrage an den Registrierungsserver, der - nach einer Suche unter dem auf ihm abgelegten Daten - die entsprechenden Antworten an den Portal-Server übermittelt, der dann die Ergebnisse entsprechend aufbereitet dem Anfrager übermittelt.

Wird beispielsweise bei einem Österreichischen Bahnbetreiber eine Verbindungsanfrage für eine Zugfahrt von Wien nach Linz gerichtet, so wird das entsprechende Ergebnisse lediglich durch eine Datenbankabfrage in der dem Bahnbetreiber eigenen Datenbank beantwortbar sein. Auch ein Bestellen und Bezahlen des Tickets ist dabei auf einfache Weise möglich.

Bei einer komplexeren Anfrage möchte ein Benutzer beispielsweise eine Zugfahrt von Wien nach Rom buchen. Weiters sucht der Benutzer nach einem Hotel in Rom sowie nach einer günstigen öffentlichen Verbindung dorthin. Wird diese Anfrage an den Portal-Server des Bahnbetreibers gerichtet, so sucht dieser eine entsprechende Verbindung nach Rom, eventuell bereits unter Einbeziehung des Registrierungsservers und der Fahrplandatenbank des italienischen Betreibers. Weiters werden über den Registrierungsserver registrierte Hotelbetreiber ermittelt, vom Portal-Server eine Verbindung zu einem oder mehreren davon hergestellt und entsprechende Angebote für den gewünschten Zeitraum eingeholt. Schließlich wird auch noch die Verbindung zu den Verkehrsbetrieben in Rom hergestellt und es werden entsprechende Verbindungen vom Bahnhof zu den jeweiligen Hotels herausgesucht. All diese Informationen werden dann dem Anfrager über eine einheitliche Ausgabemaske des Portalservers in der Sprache des Anfragers übermittelt und dieser kann auf einfache Weise, nachdem er sich entschieden hat, auch gleich dieses gesamte Paket aus Zugfahrt, öffentlichen Verkehrsmitteln und Unterkunft buchen.

Üblicherweise bekommt dazu der Portal-Server vom Registrierungsserver die Adressen der Zusatzanbieter und übermittelt diese dann dem Anfrager. Der Anfrager spezifiziert daraufhin seine Anforderungen, beispielsweise den Hoteltyp, Preise, etc., und diese Informationen werden dann von dem Portal-Server wiederum direkt an den oder die Betreiber der Zusatzdienste übersendet. Dieser Betreiber sucht dann die passenden Informationen, die er dem anfragenden Portal-Server übermittelt, und dieser stellt diese Informationen dem Kunden dann in einer entsprechend aufbereiteten Form zur Verfügung. Dadurch ist gewährleistet, dass dem Benutzer nicht alle aufgefundenen Suchergebnisse wahllos präsentiert werden und er noch eine genauere Auswahl vornehmen kann.

Natürlich ist es auch möglich, dass etwa bei einer Fahrplanauskunft nach Rom der Portal-Server unabhängig von einer Anfrage eines Benutzers in Abhängigkeit von der Destination, d.h. in diesem Falle Rom, weitere Dienste anbietet, wie etwa Hotelreservierung etc.

Es liegt im Ermessen des Portalanbieters, ob er kostenpflichtige Dienste (wie z.B. Buchen) anbieten will. Schließlich kann auch noch vorgesehen sein, dass beim Portal-Server POR Filter verwendet werden, damit einem Benutzer gewisse Ergebnisse nicht präsentiert werden. Bietet etwa der Portal-Server POR, über den ein Benutzer einsteigt, keine kostenpflichtigen Dienste an, oder möchte der Benutzer auf solche verzichten, dann sorgt ein entsprechender Filter dafür, dass diese nicht zu dem Benutzer gelangen.

Ein weiterer großer Vorteil der Erfindung ist schließlich jener, dass der Zugriff des Portal-Servers POR auf die jeweiligen Informationsserver direkt und nicht über das Registrierungszentrum erfolgt, sodass dieses durch solche Zugriffe nicht belastet wird.

Außerdem sind, da die Informationsserver autorisiert werden, die Daten auch verlässlich und nachvollziehbar. Autorisierung bedeutet dabei, dass ein Informationsserver dem Registrierungszentrum beispielsweise durch eine vertragliche Bindung der Betreiber bekannt sein muss, damit er registriert werden kann, und dadurch die Information, die von den Informationsservern angeboten wird, als richtig und sichergestellt angesehen werden kann. Bei herkömmlichen, wortbasierten Suchverfahren wird hingegen häufig mit "Lockwörtern" gearbeitet wird, durch welche auf bestimmte Internet-Seiten umgeleitet wird, die mit der Suchanfrage an sich nichts zu tun haben.

## Patentansprüche

1. Kommunikationssystem zum Auffinden und/oder Anbieten bzw. zur Verfügung stellen von Informationen und/oder Diensten in einem Kommunikationsnetzwerk (NET), wobei die Informationen in an das Kommunikationsnetzwerk (NET) angeschlossenen Informationsservern (IS1 - IS3, POR) abgelegt sind, welche mittels eines an das Kommunikationsnetzwerk (NET) angeschlossenen Datenverarbeitungsgerätes (PEC) abrufbar sind, **dadurch gekennzeichnet, dass**
- zumindest ein Registrierungsserver (REG) an das Kommunikationsnetzwerk (NET) angeschlossen ist,
- die Informationsserver (IS1 - IS3, POR) unmittelbar oder über das Kommunikationsnetzwerk (NET) mit dem zumindest einen Registrierungsserver (REG) zum Austausch von Daten (da1, da3) verbindbar sind, und
- von einem an den Registrierungsserver (REG) angebundenen Informationsserver (IS1, IS3) Daten (da1, da3) betreffend die über das Kommunikationsnetz (NET) zur Verfügung stehenden, auf dem Informationsserver (IS1, IS3) abgelegten Informationen an den Registrierungsserver (REG) übertragbar und in einem Speicher (SPE) des Registrierungsservers (REG) zumindest für die Dauer der Verbindung zwischen dem Informationsserver (IS1, IS3) und dem Registrierungsserver (REG) abspeicherbar sind.

2. Kommunikationssystem nach Anspruch 1, **dadurch gekennzeichnet, dass** der Registrierungsserver (REG) dazu eingerichtet ist, die von einem Informationsserver (IS1, IS3) stammenden Daten (da1, da3) zu vorgebbaren Zeitpunkten auf ihre Aktualität zu überprüfen.

3. Kommunikationssystem nach Anspruch 1 oder 2, **dadurch gekennzeichnet, dass** der Registrierungsserver (REG) dazu eingerichtet ist, bei einer Verbindungstrennung eines Informationsservers die entsprechenden Daten aus seinem Speicher (SPE) zu löschen.

4. Kommunikationssystem nach einem der Ansprüche 1 bis 3, **dadurch gekennzeichnet, dass** der Registrierungsserver (REG) dazu eingerichtet ist, bei einer Anfrage die an Hand der ihm zur Verfügung stehenden Daten (da1, da3) ermittelten Verbindungen zu Informationsservern (IS1, IS3) an das abfragende Datenverarbeitungsgerät (PEC) zu übermitteln.

5. Kommunikationssystem nach einem der Ansprüche 1 bis 4, **dadurch gekennzeichnet, dass** eine Anfrage mit dem Datenverarbeitungsgerät (PEC) vorerst an einen Portal-Server (POR) übermittelt wird, welcher diese an den Registrierungsserver (REG) weiterleitet.

6. Kommunikationssystem nach Anspruch 5, **dadurch gekennzeichnet, dass** der Portal-Server (POR) dazu eingerichtet ist, eine Anfrage erst dann zumindest teilweise an den Registrierungsserver (REG) weiterzuleiten, wenn dem Portal-Server (POR) eine Erledigung der Anfrage auf Grund der ihm vorliegenden Daten nicht oder nur teilweise möglich ist.

7. Kommunikationssystem nach Anspruch 5 oder 6, **dadurch gekennzeichnet, dass** der Registrierungsserver (REG) die ermittelten Suchergebnisse an den Portal-Server (POR) übermittelt, welcher entsprechend diesen Ergebnissen eine Verbindung zu einem oder mehreren Informationsservern (IS1, IS3) herstellt.

8. Kommunikationssystem nach Anspruch 7, **dadurch gekennzeichnet, dass** der Portal-Server (POR) dazu eingerichtet ist, die Suchergebnisse vorerst an das anfragende Datenverarbeitungsgerät (PEC) zu übermitteln und eine Verbindung zu einem oder mehreren der Informationsserver (IS1, IS3) erst nach einer Auswahl durch einen Benutzer des Datenverarbeitungsgerätes herzustellen.

9. Kommunikationssystem nach einem der Ansprüche 1 bis 8, **dadurch gekennzeichnet, dass** der Registrierungsserver (REG) dazu eingerichtet ist, bei kostenpflichtigem Informationsaustausch über ein Verrechnungszentrum (CLR) die Kosten zu erfassen und entweder selbst oder über das Portal (POR) einem Kunden (CUS) zu verrechnen.

10. Kommunikationssystem nach einem der Ansprüche 1 bis 9, **dadurch gekennzeichnet, dass** die Kommunikation zwischen den Servern (IS1 - IS3, POR, REG) über einheitliche Software-Schnittstellen (IDLP, IDLC) erfolgt.

11. Kommunikationssystem nach Anspruch 10, **dadurch gekennzeichnet, dass** die Schnittstellenbeschreibung mittels "Interface Definition Language" erfolgt.

12. Kommunikationssystem nach Anspruch 10 oder 11, **dadurch gekennzeichnet, dass** die Kommunikation unter Verwendung eines "Object Request Broker" erfolgt.

13. Kommunikationssystem nach Anspruch 12, **dadurch gekennzeichnet, dass** als "Object Request Broker" CORBA verwendet ist.

14. Verfahren zum Auffinden und/oder Anbieten bzw. zur Verfügung stellen von Informationen und/oder Diensten in einem Kommunikationsnetzwerk (NET), wobei die Informationen in an das Kommunikationsnetzwerk (NET) angeschlossenen Informationsservern (IS1 - IS3, POR) abgelegt sind, welche mittels eines an das Kommunikationsnetzwerk (NET) angeschlossenen Datenverarbeitungsgerätes (PEC) abgerufen werden, **dadurch gekennzeichnet, dass**
- die Informationsserver (IS1 - IS3, POR) unmittelbar oder über das Kommunikationsnetzwerk (NET) mit zumindest einem an das Kommunikationsnetzwerk (NET) angeschlossenen Registrierungsserver (REG) zum Austausch von Daten (da1, da3) verbunden werden, und
- von einem an den Registrierungsserver (REG) angebundenen Informationsserver (IS1, IS3) Daten (da1, da3) betreffend die über das Kommunikationsnetz (NET) zur Verfügung stehenden, auf dem Informationsserver (IS1, IS3) abgelegten Informationen an den Registrierungsserver (REG) übertragen und in einem Speicher (SPE) des Registrierungsservers (REG) zumindest für die Dauer der Verbindung zwischen dem Informationsserver (IS1, IS3) und dem Registrierungsserver (REG) abgespeichert werden.

15. Verfahren nach Anspruch 14, **dadurch gekennzeichnet, dass** die von einem Informationsserver (IS1, IS3) stammenden Daten (da1, da3) von dem Registrierungsserver (REG) zu vorgebbaren Zeitpunkten auf ihre Aktualität überprüft werden.

16. Verfahren nach Anspruch 14 oder 15, **dadurch gekennzeichnet, dass** von dem Registrierungsserver (REG) bei einer Verbindungstrennung eines Informationsservers die entsprechenden Daten aus seinem Speicher (SPE) gelöscht werden.

17. Verfahren nach einem der Ansprüche 14 bis 16, **dadurch gekennzeichnet, dass** von dem Registrierungsserver (REG) bei einer Anfrage die an Hand der ihm zur Verfügung stehenden Daten (da1, da3) ermittelten Verbindungen zu Informationsservern (IS1, IS3) an das abfragende Datenverarbeitungsgerät (PEC) übermittelt werden.

18. Verfahren nach einem der Ansprüche 14 bis 17, **dadurch gekennzeichnet, dass** eine Anfrage mit dem Datenverarbeitungsgerät (PEC) vorerst an einen Portal-Server (POR) übermittelt wird, von welchem diese an den Registrierungsserver (REG) weiterleitet wird.

19. Verfahren nach Anspruch 18, **dadurch gekennzeichnet, dass** von dem Portal-Server (POR) eine Anfrage erst dann zumindest teilweise an den Registrierungsserver (REG) weitergeleitet wird, wenn dem Portal-Server (POR) eine Erledigung der Anfrage auf Grund der ihm vorliegenden Daten nicht oder nur teilweise möglich ist.

20. Verfahren nach Anspruch 18 oder 19, **dadurch gekennzeichnet, dass** von dem Registrierungsserver (REG) die ermittelten Suchergebnisse an den Portal-Server (POR) übermittelt werden, von welchem entsprechend diesen Ergebnissen eine Verbindung zu einem oder mehreren Informationsservern (IS1, IS3) herstellt wird.

21. Verfahren nach Anspruch 20, **dadurch gekennzeichnet, dass** von dem Portal-Server (POR) die Suchergebnisse vorerst an das anfragende Datenverarbeitungsgerät (PEC) übermittelt werden und eine Verbindung zu einem oder mehreren der Informationsserver (IS1, IS3) erst nach einer Auswahl durch einen Benutzer des Datenverarbeitungsgerätes hergestellt wird.

22. Verfahren nach einem der Ansprüche 14 bis 21, **dadurch gekennzeichnet, dass** von dem Registrierungsserver (REG) bei kostenpflichtigem Informationsaustausch über ein Verrechnungszentrum (CLR) die Kosten erfasst und entweder von diesem selbst oder über das Portal (POR) einem Kunden (CUS) verrechnet werden.

23. Verfahren nach einem der Ansprüche 14 bis 22, **dadurch gekennzeichnet, dass** die Kommunikation zwischen den Servern (IS1 - IS3, POR, REG) über einheitliche Software-Schnittstellen (IDLP, IDLC) erfolgt.

24. Verfahren nach Anspruch 23, **dadurch gekennzeichnet, dass** die Schnittstellenbeschreibung mittels "Interface Definition Language" erfolgt.

25. Verfahren nach Anspruch 23 oder 24, **dadurch gekennzeichnet, dass** die Kommunikation unter Verwendung eines "Object Request Broker" erfolgt.

26. Verfahren nach Anspruch 25, **dadurch gekennzeichnet, dass** als "Object Request Broker" CORBA verwendet wird.
